# EUROPÄISCHE PATENTSCHRIFT

(11) **EP 0 562 348 B1**
(45) Veröffentlichungstag und Bekanntmachung des Hinweises auf die Patenterteilung: **02.08.1995**
(21) Anmeldenummer: 93103726.1
(22) Anmeldetag: 09.03.1993
(51) Int. Cl.: F16L 3/10

(54) **Vorrichtung zur Befestigung eines strangförmigen Gegenstandes an einer Unterlage**
Device for fixing an elongated object to a base
Dispositif de fixation d'objets allongés à un support

(30) Priorität: 19.03.1992 DE 4208791
(43) Veröffentlichungstag der Anmeldung: 29.09.1993
(73) Patentinhaber: kabelmetal electro GmbH, 30002 Hannover (DE)
(72) Erfinder: Stansbie, Michael, W-3002 Wedemark (DE); Schiefer, Hans-Jürgen, W-3000 Hannover 91 (DE); Cauderay, Francois, W-3012 Langenhagen (DE)

(56) Entgegenhaltungen:
- EP-A- 0 010 073
- DE-A- 3 019 303
- FR-A- 1 477 777
- GB-A- 974 002
- US-A- 1 963 908

## Beschreibung

Die Erfindung bezieht sich auf eine Vorrichtung zur Befestigung eines strangförmigen Gegenstandes an einer Unterlage, bestehend aus einer etwa U-förmig gebogenen Schelle aus Federstahl, die einen Befestigungsteil zu ihrer Festlegung an der Unterlage, zwei einteilig mit dem Befestigungsteil verbundene, durch einen Zwischenraum zur Aufnahme des strangförmigen Gegenstandes voneinander getrennte Schenkel und eine Verriegelung zum Verriegeln der freien Enden der beiden Schenkel aufweist (FR-A-1 477 777).

"Strangförmige Gegenstände", die mit dieser Vorrichtung befestigt werden sollen, sind Kabel und Rohre aller Art. Stellvertretend für alle möglichen Anwendungen wird im folgenden das "Rohr" berücksichtigt. Die Unterlage, an der das Rohr befestigt werden soll, kann eine Wand, ein Mast oder jede beliebige tragfähige Konstruktion sein. Die bisher für diese Zwecke bekannten Montageschellen sind aufwendig gestaltet und zu montieren. Auch die Festlegung des Rohres in den Schellen ist oft schwierig.

Aus dem DE-U-7 837 479 geht eine Vorrichtung hervor, welche der Befestigung eines elektrischen Hohlleiters an einem Mast dient. Es wird bei dieser Vorrichtung neben der metallischen Schelle zusätzlich eine Einlage aus elastischem Material verwendet. Die Schelle selbst besteht aus einem mechanisch stabilen Teil und aus einem mit demselben verbindbaren, in Grenzen verformbaren Teil. Beide Teile der Schelle werden mittels einer Schraube, die an den freien Enden derselben anzubringen ist, verschlossen und miteinander verspannt. Diese bekannte Vorrichtung besteht einschließlich Einlage aus vier Teilen. Die Schelle selbst hat drei Teile, die bei ihrer Montage zusammengebaut werden müssen. Ihre Handhabung ist daher sehr aufwendig, was sich insbesondere an ungünstigen Montageorten störend bemerkbar macht. Die Montage einer aus mehreren Teilen bestehenden Schelle ist beispielsweise an Masten oft lästig.

Außerdem beschreibt die US-A-1 963 908 eine metallische Schelle mit zwei Schenkeln, die zur Aufnahme des strangförmigen Gegenstandes in ihrem mittleren Bereich jeweils ausgebaucht sind und jeweils einen von dem ausgebauchten Bereich ausgehenden Steg aufweisen.

Die eingangs erwähnte FR-A-1 477 777 beschreibt eine Schelle zum Befestigen von Rohren oder ähnlichen Gegenständen. Zu ihrer Befestigung weist diese Schelle einen massiven Fuß auf, in dem eine Gewindebohrung angebracht ist. Von dem Fuß gehen zwei in entgegengesetzter Richtung gebogene Schenkel aus, zwischen denen ein Rohr angeordnet werden kann. Die Länge und die Krümmung der Schenkel sind auf die Abmessungen des aufzunehmenden Rohres abgestimmt. Die Schenkel haben im Bereich ihrer freien Enden je eine Bohrung. Die Schelle kann mittels eines separaten Bügels verschlossen werden, der mit seinen Enden in die Bohrungen der Schenkel eingeschnappt wird.

Der Erfindung liegt die Aufgabe zugrunde, die eingangs geschilderte Vorrichtung bezüglich Aufbau und Handhabung wesentlich zu vereinfachen.

Diese Aufgabe wird gemäß der Erfindung dadurch gelöst,
- daß die beiden Schenkel der Schelle an den beiden Übergangsstellen zum Befestigungsteil derselben biegbar mit demselben verbunden sind,
- daß die beiden Schenkel zur Aufnahme des strangförmigen Gegenstandes in ihrem mittleren Bereich jeweils ausgebaucht sind und jeweils einen von dem ausgebauchten Bereich ausgehenden Steg aufweisen und
- daß am freien Ende des einen Steges der Schelle ein über das Ende des anderen, mit einer Abkröpfung versehenen Steges klappbarer Bügel unverlierbar angebracht ist.

Diese Vorrichtung besteht aus einer einteiligen Schelle mit dem unverlierbar daran angebrachten Bügel als Verschlußelement. Sie ist daher einfach aufgebaut und einfach zu montieren. Das Anbringen des Rohres in der Schelle ist ebenfalls erleichtert, da hierzu nur die beiden Schenkel der aus Federstahl bestehenden Schelle auseinandergedrückt zu werden brauchen. Sie federn in Richtung ihrer Ausgangsstellung zurück, wenn das Rohr in dem dafür vorgesehenen Zwischenraum liegt. Das Rohr ist dann bereits relativ fest gehalten, da die beiden Schenkel bei richtiger Bemessung der Schelle wegen deren federnder Eigenschaft fest an der Oberfläche des Rohres anliegen. Die Schelle wird dann mit dem Bügel verschlossen. Dazu brauchen nur die freien Enden der beiden Schenkel so weit zusammengedrückt werden, bis der an dem einen Schenkel angebrachte Bügel über den anderen geschnappt werden kann. Da die Schenkel anschließend wieder in Richtung ihrer Ausgangsposition zurückfedern, ist die Position des Bügels in der Schließstellung der Schelle gesichert. Er hält die Enden der beiden Schenkel fest zusammen, so daß ein erhöhter Druck auf die Oberfläche des Rohres ausgeübt wird, der für einen sicheren Halt des Rohres in der Schelle ausreicht.

Vorteilhafte Ausgestaltungen der Erfindung sind in den Unteransprüchen angegeben.

Ein Ausführungsbeispiel des Erfindungsgegenstandes ist in den Zeichnungen dargestellt.

Es zeigen:
Fig. 1 bis 3 eine für die Vorrichtung nach der Erfindung verwendbare Schelle in drei unterschiedlichen Ansichten.
Fig. 4 eine geschlossene Schelle mit darin befindlichem Rohr.
Fig. 5 eine an einer Unterlage befestigte Schelle.

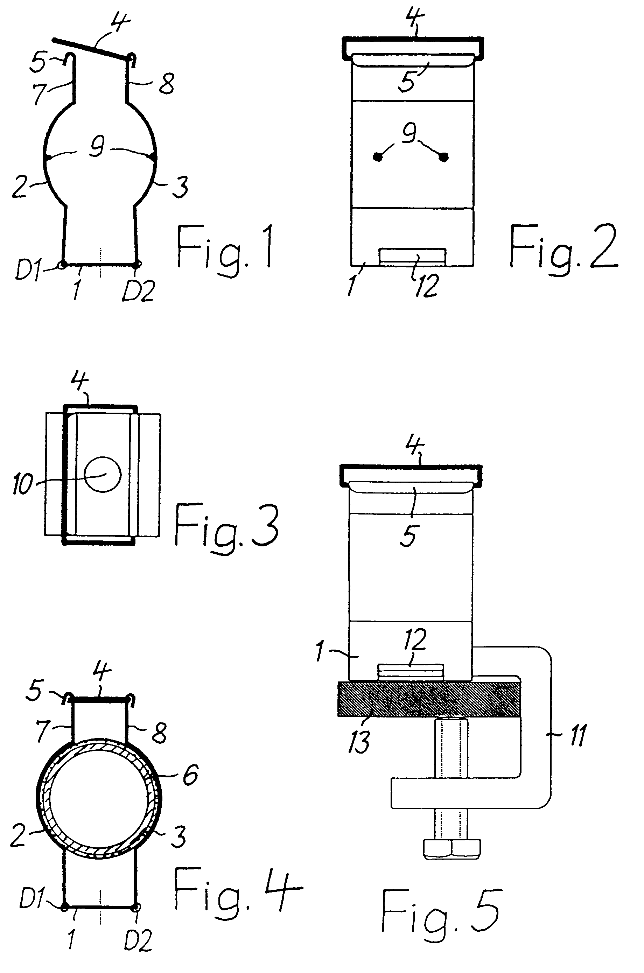

Die in Fig. 1 dargestellte, im wesentlichen U-förmig gestaltete Schelle besteht aus Federstahl. Sie hat einen Befestigungsteil 1 zu ihrer Festlegung an einer Unterlage und zwei einteilig mit dem Befestigungsteil verbundene Schenkel 2 und 3. Am freien Ende des Schenkels 3 ist ein Bügel 4 schwenkbar, aber unverlierbar angebracht. Am freien Ende des Schenkels 2 befindet sich eine in Richtung vom Schenkel 3 weg weisende Abkröpfung 5.

Die beiden Schenkel 2 und 3 sind durch einen Zwischenraum voneinander getrennt, damit ein zu umschließendes Rohr 6 (Fig. 4) darin untergebracht werden kann. Dazu ist der mittlere Bereich der Schenkel 2 und 3 außerdem ausgebaucht. Der ausgebauchte Bereich der Schenkel 2 und 3 wird der Querschnittsform des zu umschließenden Gegenstandes möglichst gut angepaßt. Im dargestellten Ausführungsbeispiel sind die Ausbauchung zur Aufnahme des einen kreisförmigen Querschnitt aufweisenden Rohres 6 rund ausgeführt.

Von den Ausbauchungen der Schenkel 2 und 3 stehen auf der dem Befestigungsteil 1 abgewandten Seite Stege 7 und 8 ab, an deren freien Enden der Bügel 4 und die Abkröpfung 5 angebracht sind. Die Stege 7 und 8 verlaufen etwa parallel zueinander.

An der inneren Oberfläche der Schenkel 2 und 3 können im Bereich der Ausbauchungen Vorsprünge 9 angebracht sein, die sich gegebenenfalls in die Oberfläche des umschlossenen Rohres 6 eindrücken, wenn dessen äußere Schicht weich genug ist. Dadurch kann ein verbesserter Halt des Rohres 6 in der Schelle erreicht werden. Zum gleichen Zwecke ist es auch möglich, die innere Oberfläche der Schenkel 2 und 3 im Bereich der Ausbauchungen aufzurauhen. Das kann auch dann durchgeführt werden, wenn Vorsprünge 9 vorhanden sind.

Im Befestigungsteil 1 der Schelle kann ein Durchgangsloch 10 angebracht sein. Die Schelle kann dann beispielsweise mittels einer Schraube an eine Unterlage angeschraubt werden. Für die Befestigung der Schelle kann aber auch eine aus Fig. 5 ersichtliche Montageklemme 11 verwendet werden, die in den Befestigungsteil 1 der Schelle eingesteckt werden kann. Zur Fixierung der Schelle auf der Montageklemme 11 bzw. umgekehrt können im Befestigungsteil 1 der Schelle Durchbrechungen 12 angebracht sein, in welche in Arbeitsstellung entsprechende Vorsprünge der Montageschelle 11 eingreifen.

Nach Befestigung der Schelle an einer Unterlage 13, beispielsweise einer Strebe eines Mastes, hat dieselbe eine aus Fig. 1 ersichtliche Gestalt. Zur Festlegung des Rohres 1 in der Schelle wird dasselbe zwischen den beiden Stegen 7 und 8 hindurch bis in den Bereich der Ausbauchungen gedrückt. Dabei werden die beiden Schenkel 2 und 3 nach außen gebogen, und zwar im wesentlichen um die beiden in den Fig. 1 und 4 eingezeichneten "Drehstellen" D1 und D2. Die zunächst schräg aufeinander zu verlaufenden Teile der Schenkel 2 und 3 im Bereich des Befestigungsteils 1 werden dadurch im wesentlichen parallel zueinander ausgerichtet, so wie es aus Fig. 4 hervorgeht. Wenn das Rohr 6 seine Montageposition erreicht hat, werden die Stege 7 und 8 zusammengedrückt. Das kann ohne Werkzeug mit einer Hand durchgeführt werden. Anschließend wird der Bügel 4 über die Abkröpfung 5 geschwenkt Die die Stege 7 und 8 zusammendrückende Kraft kann danach aufgehoben werden. Der Bügel 4 legt sich dann gemäß Fig. 4 unter die Abkröpfung 5. Die Schelle ist verschlossen.

Unabhängig von der Bemessung der Schelle und von dem eingesetzten Material kann ihre Federkraft bzw. die Kraft, mit der ihre Schenkel 2 und 3 gegen das Rohr 6 drücken, durch den Winkel eingestellt werden, mit dem die Schenkel 2 und 3 vom Basisteil der Schelle abstehen. Je schräger die beiden Schenkel 2 und 3 im Bereich des Befestigungsteils 1 mit aufeinander zu gerichteten Verlauf angeordnet werden, desto weiter müssen sie zur Aufnahme des Rohres 6 auseinander gebogen werden und desto größer wird der auf das Rohr 6 ausgeübte Druck.

## Patentansprüche

1. Vorrichtung zur Befestigung eines strangförmigen Gegenstandes an einer Unterlage, bestehend aus einer etwa U-förmig gebogenen Schelle aus Federstahl, die einen Befestigungsteil (1) zu ihrer Festlegung an der Unterlage, zwei einteilig mit dem Befestigungsteil (1) verbundene, durch einen Zwischenraum zur Aufnahme des strangförmigen Gegenstandes voneinander getrennte Schenkel (2,3) und eine Verriegelung zum Verriegeln der freien Enden der beiden Schenkel (2,3) aufweist, dadurch gekennzeichnet,
- daß die beiden Schenkel (2,3) der Schelle an den beiden Übergangsstellen (D1,D2) zum Befestigungsteil (1) derselben biegbar mit demselben verbunden sind,
- daß die beiden Schenkel (2,3) zur Aufnahme des strangförmigen Gegenstandes (6) in ihrem mittleren Bereich jeweils ausgebaucht sind und jeweils einen von dem ausgebauchten Bereich ausgehenden Steg (7,8) aufweisen und
- daß am freien Ende des einen Steges (8) der Schelle ein über das Ende des anderen, mit einer Abkröpfung (5) versehenen Steges (7) klappbarer Bügel (4) unverlierbar angebracht ist.

2. Vorrichtung nach Anspruch 1, dadurch gekennzeichnet, daß an den inneren Oberflächen der ausgebauchten Bereiche der Schenkel (2,3) Vorsprünge (9) angebracht sind.

3. Vorrichtung nach Anspruch 1, dadurch gekennzeichnet, daß die inneren Oberflächen der ausgebauchten Bereiche der Schenkel (2,3) aufgerauht sind.

## Claims

1. Device for fixing an elongated object to a base, comprising a spring-steel clip which is bent approximately into a U-shape and exhibits a fixing part (1) for its securement to the base, two legs (2, 3), which are connected in one piece to the fixing part (1) and are separated from each other by an interspace for receiving the elongated object and a locking device for locking in place the free ends of the two legs (2, 3), characterized in that
- the two legs (2, 3) of the clip, at the two transition points (D1, D2) to the fixing part (1) of the clip, are flexibly connected to the said fixing part,
- the two legs (2, 3), for receiving the elongated object (6), are respectively bulged in their middle region and respectively exhibit a bar (7, 8) emanating from the bulged region, and
- to the free end of the one bar (8) of the clip there is captively fitted a clamp (4) which can be tilted over the end of the other bar (7) provided with an offset (5).

2. Device according to Claim 1, characterized in that fitted to the inner surfaces of the bulged regions of the legs (2, 3) are projections (9).

3. Device according to Claim 1, characterized in that the inner surfaces of the bulged regions of the legs (2, 3) are roughened.

## Revendications

1. Dispositif pour fixer un objet de forme allongée sur un support, consistant en une coquille en acier à ressort, coudée à peu près en forme d'U, qui présente une pièce de fixation(1) servant à l'attacher sur le support, deux branches (2,3) reliées de façon monobloc à la pièce de fixation (1) , séparées l'une de l'autre par un espace intermédiaire qui sert à recevoir l'objet de forme allongée et un verrouillage- servant à verrouiller les extrémités libres des deux branches (2,3), dispositif caractérisé en ce que :
- les deux branches (2,3) de la coquille sont reliées aux deux points de jonction (D1,D2) avec leur pièce de fixation (1) de façon flexible par rapport à celle-ci.
- les deux branches (2,3) sont respectivement ventrues dans leur zone médiane pour recevoir l'objet de forme allongée (6) et présentent respectivement une aile (7,8) partant de la zone ventrue et
- à l'extrrémité libre de l'une des ailes (8) de la coquille on met, de façon imperdable, un étrier (4) qui peut se rabattre sur l'extrémité de l'autre aile (7) pourvue d'un oreillon (5).

2. Dispositif selon la revendication 1, caractérisé en ce que, sur les faces intérieures des zones ventrues des branches (2,3), on dispose des ergots (9).

3. Dispositif selon la revendication 1, caractérisé en ce que les faces intérieures des zones ventrues des branches (2,3) sont rendues rugueuses.
